(19) Europäisches Patentamt

European Patent Office

Office européen des brevets

(11) Publication number: **0 256 327 B1**

(12) **EUROPEAN PATENT SPECIFICATION**

(45) Date of publication of patent specification: **30.09.92**  (51) Int. Cl.⁵: **G06K 11/10**

(21) Application number: **87110481.6**

(22) Date of filing: **20.07.87**

(54) **Electromagnetic induction type coordinates reader.**

(30) Priority: **08.08.86 JP 187627/86**

(43) Date of publication of application:
**24.02.88 Bulletin 88/08**

(45) Publication of the grant of the patent:
**30.09.92 Bulletin 92/40**

(84) Designated Contracting States:
**DE FR GB**

(56) References cited:
**US-A- 4 552 991**

**PATENT ABSTRACTS OF JAPAN vol. 7, no. 282 (P-243)(1427), 16 December 1983 JP-A-58 159191 (HITACHI SEIKO K.K.)**

**PATENT ABSTRACTS OF JAPAN vol. 7, no. 210 (P-223)(1355), 16 September 1983 & JP-A-58 103032 (YOKOGAWA DENKI SEISAKUSHO K.K.)**

**PATENT ABSTRACTS OF JAPAN vol. 8, no. 38 (P-255)(1475), 18 February 1984 JP-A-58 191091 (HITACHI SEIKO K.K.)**

**PATENT ABSTRACTS OF JAPAN vol. 8, no. 179 (P-295)(1616), 17 August 1984 & JP-A-59**

071586 (SONY K.K.)

(73) Proprietor: **SEIKO INSTRUMENTS INC.**
**31-1, Kameido 6-chome Koto-ku**
**Tokyo 136(JP)**

(72) Inventor: **Saeki, Shinji**
**c/o Seiko Instruments Inc. 31-1, Kameido**
**6-chome**
**Koto-ku§Tokyo(JP)**
Inventor: **Morita, Yoshiyuki**
**c/o Seiko Instruments Inc. 31-1, Kameido**
**6-chome**
**Koto-ku§Tokyo(JP)**

(74) Representative: **Grupe, Peter, Dipl.-Ing. et al**
**Patentanwaltsbüro Tiedtke-**
**Bühling-Kinne-Grupe-Pellmann-Grams-Struif-**
**-Winter-Roth Bavariaring 4**
**W-8000 München 2(DE)**

EP 0 256 327 B1

## Description

This invention relates to a coordinate determining device as an input device of digital apparatuses such as a computer.

More specifically, the present invention relates to an electromagnetic induction type coordinate determining device which utilizes electromagnetic coupling between an excitation coil incorporated in a coordinates indicator for indicating an input point and each sense line forming a large number of loops incorporated in a tablet as a reading tablet, and compares and calculates induction signals induced by the sense lines in order to calculate the coordinates value of the position of the coordinates indicator.

A coordinate determining device of the prior art is disclosed in the Patent Abstracts of Japan vol. 7, no. 282 (P-243) [1427], December 16, 1983; & JP-A-58 159191 (Hitachi Seiko KK) which has a coordinate indicator having an excitation coil for generating an electromagnetic field; an excitation circuit for driving said excitation coil; sense lines receiving electromagnetically coupled signals from said excitation coil, each line in said sense lines forming a loop; means for comparing the amplitude of a signal induced in one of said sense lines with the amplitudes of signals induced in sense lines adjacent to said one and calculating the coordinate value of the position of said coordinate indicator.

Furthermore, coordinate determing devices of the prior art are disclosed in Japanese Patent Publication No. 16317/1984 entitled "Method and Apparatus for Reading Coordinates" assigned to the assignee of the present invention and Japanese Patent Publication No. 35069/1984 entitled "Interpolation Method for Coordinates Reader" assigned to the assignee of the present invention.

Hereinafter, a typical conventional coordinate determining device will be described with reference to the accompanying drawings.

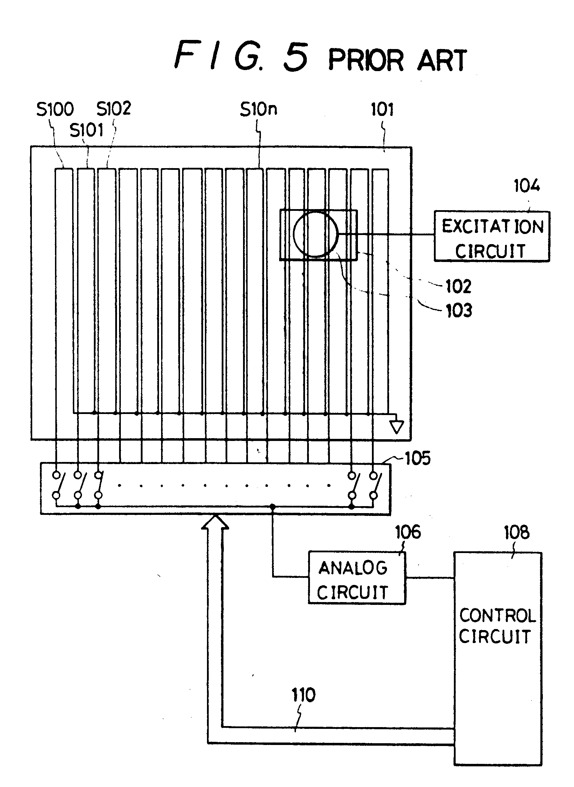

Fig. 5 is a block diagram showing a conventional coordinate determining device. Reference numeral 101 represents a tablet, where sense lines S100, ..., S10n consisting of a conductor and forming a large number of loops are laid down. Reference numeral 102 represents a coordinates indicator, which has therein an excitation coil 103 for generating an alternating magnetic field. Reference numeral 104 represents an excitation circuit, which excites the excitation coil 103. Reference numeral 105 represent a scanning circuit, which consists of a large number of switching circuits. One of the ends of each sense line S10n is connected to one of the ends of each of the scanning circuits 105 with the other being connected as a common signal line to an analog circuit 106. Reference numeral 108 represents a control circuit, which controls the overall operation of the coordinate determining device and calculates a coordinates value.

The coordinate determining device having the construction described above calculates the coordinates value in the following way. The coordinates indicator 102 generates an alternating magnetic field by the excitation circuit 104. The control circuit 108 outputs a scanning address 110 to the scanning circuits and sequentially closes them in such a manner as to connect one of the sense lines to the analog circuit 106. When the coordinates indicator is placed on the tablet under this state, a induction signal develops on the sense line due to electromagnetic coupling between the excitation coil 103 and the sense line S10n. This induction signal is inputted by the scanning circuit 105 to the analog circuit 106, is amplified and subjected to waveform-shaping and thereafter inputted to the control circuit 108. The control circuit 108 sequentially receives the induction signal induced to each sense line, compares the amplitudes of these guide signals and calculates the coordinates value of the position of the coordinates indicator.

In the conventional coordinate determining device described above, each sense line is connected to each of the scanning circuits. For this reason, when a tablet having a large read surface is to be constructed, the number of sense lines increases and the number of scanning circuits must be increased, too. This results in the increase of production costs and in the trouble occurrence ratio.

A tablet having a large read surface can be constructed without increasing the number of sense lines, in principle, by increasing the pitch between the sense lines. According to this system, however, resolution between the sense lines must be increased in order to obtain predetermined resolution, and a large load is applied to the analog circuit.

An object and advantage of the present invention is to provide a coordinate determining device constituted by smaller scanning circuits than conventional scanning circuits.

According to the present invention this object is accomplished by an electromagnetic induction type coordinate determining device comprising: a coordinate indicator having an excitation coil for generating an electromagnetic field; an excitation circuit for driving said excitation coil; sense lines receiving electromagnetically coupled signals from said excitation coil, each line in said sense lines forming a loop; means for comparing the amplitude of a signal induced in one of said sense lines with the amplitudes of signals induced in sense lines adjacent to said one and calculating the coordinate value of the position of said coordinate indicator; said device being characterized in that said sense lines have a first and a second group of sense lines, each line in said first group being connected in series with a corresponding line in said second group; in that the loops formed by the lines in each group are arranged in such a manner that the phase of a signal induced in the first group of lines is opposite to the phase of a signal induced in the second group of lines; in that scanning circuit means are provided for sequentially selecting each line in said first group; and in that phase discriminating means are provided for comparing the phase of the signal of the line selected by said scanning circuit means with the phase of the signal used to drive the excitation coil so as to determine whether the coordinate indicator is nearer to the first or the second group of lines.

In the coordinate determining device having the construction described above, the scanning circuit has a circuit scale which is 1/2 of the conventional scanning circuit and when one scanning circuit is selected, two sense lines are selected simultaneously. Since the phase discrimination circuit is disposed, however, it is possible to detect from which sense lines the induction signal is detected, and the position on the tablet can be calculated in the same way as in the prior art determining devices.

Fig. 1 is a block diagram of a coordinate determining device in accordance with the present invention;
Fig. 2 is a circuit diagram of a scanning circuit employed in Fig. 1;
Fig. 3 is a circuit diagram of a phase discrimination circuit employed in Fig. 1;
Fig. 4 is a waveform diagram of Fig. 3; and
Fig. 5 is a block diagram of a conventional coordinate determining device.

DETAILED DESCRIPTION OF THE PREFERRED EMBODIMENT

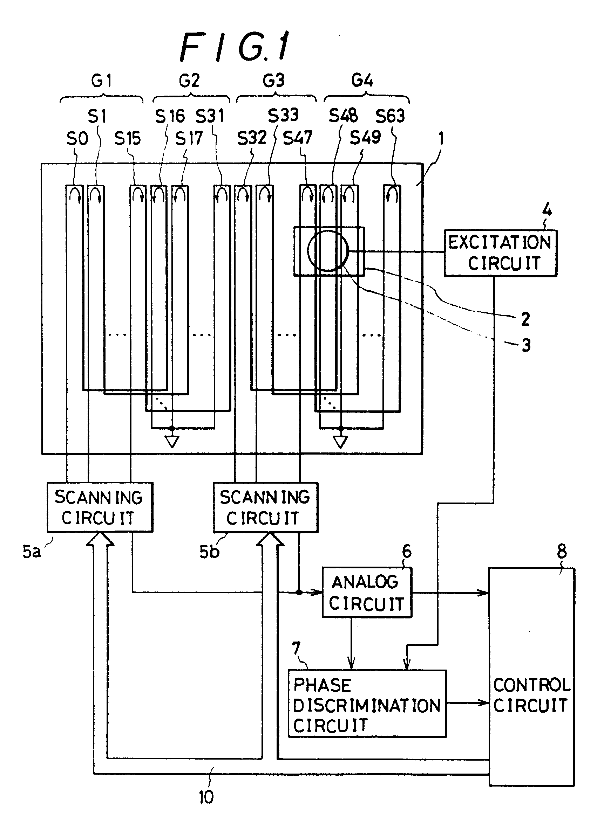

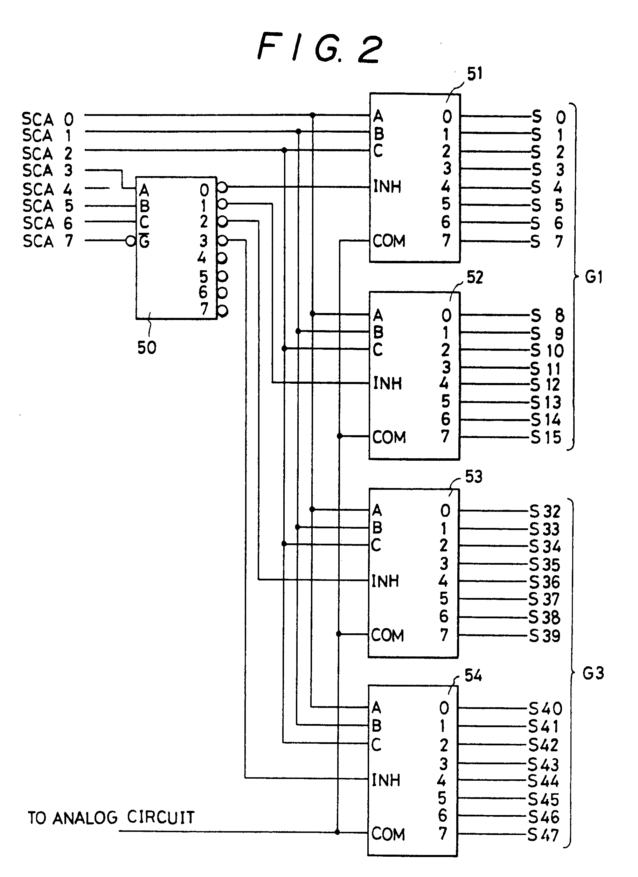

Hereinafter, a preferred embodiment of the present invention will be described with reference to the drawings. Incidentally, the X and Y axes of the sense lines of the coordinate determining device are shown laid downs in such a manner as to cross one another at right angles, but the circuit diagram of only the X axis is shown in the block diagram of Fig. 1 and the circuit diagram of the scanning circuit of Fig. 2 for explanation purpose. The construction and operation of the Y axis are the same as those of the X axis.

First of all, the construction of the coordinate determining device in accordance with an embodiment of the present invention will be described with reference to Fig. 1. Reference numeral 8 represents a control circuit. A control signal for controlling the coordinate determining device as a whole and an input signal for calculating the coordinates are connected to this circuit. Reference numeral 1 represents a tablet, where sense lines Sn are laid down. Detailed Description of the method of laying down these sense lines will be given later. Reference numeral 2 represents a coordinates indicator, which is equipped therein with an excitation coil 3 for generating an alternating magnetic field. Reference numeral 4 represents an excitation circuit, to which the excitation coil 3 is connected. Reference numerals 5a and 5b represents scanning circuits, to which the sense lines Sn are connected. A scanning address line 10 is connected to the control circuit 8. This scanning circuit will be described elsewhere in further detail. Reference numeral 6 represents an analog circuit, whose inputs are connected to the output of scanning circuits 5a and 5b described above. The analog circuit 6 has two outputs, one of which is connected to the control circuit 8 described above with the other being connected to a phase discrimination circuit 7. The phase discrimination circuit 7 has two inputs, one of which is connected to the analog circuit 6 with the other, to the excitation circuit 4. The output of the phase discrimination circuit 7 is connected to the control circuit 8. This phase discrimination circuit 7 will be described elsewhere in further detail. The coordinate determining device in accordance with the present invention is different from the conventional coordinate determining device in the construction of its sense lines Sn and the scanning circuits 5a, 5b, and includes afresh the phase discrimination circuit 7.

Next, the sense lines will be explained. The following description will deal with the case where 64 sense lines SO .... S63 are laid down, by ways of example. First of all, these sense lines are divided into four groups, each consisting of 16 sense lines. These groups will be called "G1 (SO - S15), G2 (S16 - S31), G3 (S32 - S47), G4 (S48 - S63)", respectively. One of the ends of each sense line of G1 and G3 is connected to the scanning circuit 5a, 5b in the same way as in the prior art determining devices. One of the ends of each sense line of G2 and G4 is connected to the other end of each sense line of G1 and G3 in the relation such that SO corresponds to S16, S1 corresponds to S17, ... , S47 corresponds to S63 with a spacing of 15 sense lines between them and moreover, the directions of the loops of the sense lines are opposite to one another. Fig. 1 shows the case where G1 and G3 are laid down clockwise whereas G2 and G4 are laid down counter-clockwise. The other end of each sense line of G2 and G4 is connected in common to the ground.

Next, the construction of the scanning circuit will be explained with reference to Fig. 2. Reference numeral 50 represents a decoder IC and "SN 74LS138" (manufactured by Texas Instruments), for example, is used. Reference numerals 51 to 54 represent analog switching ICs and "CD4051B" (manufactured by RCA), for example, is used. Symbols SCAO to SCA7 represent scanning addresses that are inputted from the control circuit 8 and used for selecting the sense lines. The difference of this scanning circuit from the prior art circuit is that SCA4 is connected. The sense lines So to S15 are connected to the analog switching ICs 51 and 52, and S32 to S47 are connected to 53 and 54. Though the sense lines S16 to S31 and S48 to S63 are not shown in this circuit diagram, they are connected to SO to S15 and S32 to S47 in series as described already.

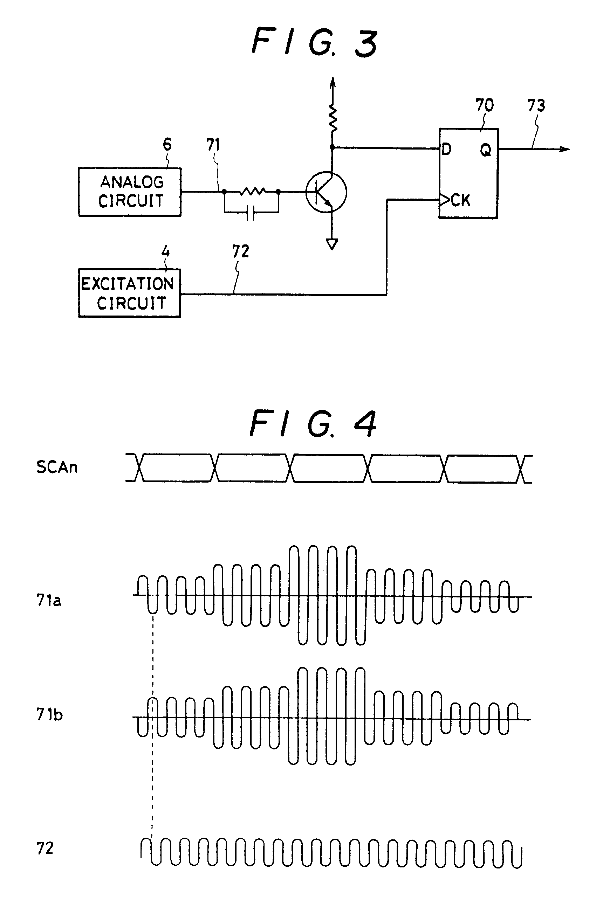

Next, Fig. 3 shows the construction of the phase discrimination circuit. This circuit is constructed by a heretofore known method, and the induction signal 71 from the analog circuit 6 is connected to a D input terminal of D flip-flop 70 and an excitation signal 72 from the excitation circuit 4 as a reference signal for comparing the phases is connected to a CK input terminal of D flip-flop 70.

Next, the operation and the method of calculating the coordinates value will be explained with reference to Figs. 1, 2 and 4. The control circuit 8 outputs the scanning address 10 to the scanning circuits 5a and 5b in order to select the sense lines. Since the sense lines of G1 and the sense lines of G2 are connected in series to one of the scanning circuits at this time as described already, two sense lines are selected for a certain address signal. When the address signal is 20H (hexadecimal number), for example, the sense line S8 and the sense line S24 connected in series with the former are simultaneously selected.

It will be now assumed that the coordinates indicator 2 is placed near anyone of the sense lines of G1. At this time, if sequential scanning is carried out by applying the address signal SCAn to the scanning circuits 5a and 5b, the induction signals 71a shown in Fig. 4 are sequentially inputted to the analog circuit. The detailed coordinates value between the sense lines can be determined by the comparing and calculating the amplitudes of the induction signals as has already been known in the conventional coordinate determining device. In accordance with the coordinate determining device in accordance with the present invention, however, the G1 sense lines and G2 sense lines are connected in series to the same scanning circuit and the induction signal 71a in this case is the same as the induction signal 71b when the coordinates indicator is placed near the G2 sense lines so long as their amplitudes are detected. Therefore, in order to recognize near which groups the coordinates indicator is placed, the information other than the amplitude must be detected by other means.

As described above, the directions of the loops of the G1 sense lines and G2 sense lines are opposite. Therefore, the phase relation between the induction signals 71a and 71b are opposite. The phase discrimination circuit 7 is disposed in order to detect such a phase relation. The phase discrimination circuit 7 receives the induction signal amplified and waveform-shaped induction signal 71 from the analog circuit and the excitation signal 72 from the excitation circuit as the reference signal, compares them with each other and outputs the phase discrimination signal 73 which assumes the state 0 or 1 in accordance with the advance or delay of the phase. The circuit shown in Fig. 3 receives the induction signal 71 and the excitation signal 72 and outputs the phase discrimination signal 73 in such a manner as to generate 0 when the phase advance of the induction signal 71 exists with respect to the excitation signal 72 and the phase delay of the former exists for the latter when the phase of the induction signal 71 rotates by 180°. In this manner, if the circuit is constructed in such a fashion that the phase discrimination signal 73 becomes 0 when the coordinates indicator is near the G1 sense lines and 1 when the indicator is near the G2 sense lines, this phase discrimination signal 73 becomes a signal corresponding to the address signal SCA and it becomes possible to detect near which of the G1 and G2 sense lines the coordinates indicator is placed.

The construction of the sense lines and scanning circuits and the phase discrimination circuit are not particularly limited to those described above, and various means for accomplishing them can be employed. In connection with the construction of the sense lines and scanning circuits, it is only necessary that the spacing between the two sense lines to be connected to one scanning circuit may be to such an extent that the signal to be induced to the other sense line becomes negligibly small when the excitation coil exists on one sense line. In the embodiment described above, the pitch of the sense lines is 6.4 mm. Since sixteen sense lines are grouped in one group, the two sense lines connected in series are spaced apart by 102.4 mm. The spacing may be greater or smaller than this value in consideration of the influence described above.

The phase discrimination circuit is disposed in order to discriminate the phases of the induction signals with respect to the excitation signals. Therefore, besides the phase discrimination circuit of the embodiment described above, various means such as a sample-and-hold circuit, an analog calculator, and the like, can be used.

As described above, two sense lines spaced apart from each other by a predetermined distance are connected in series to the same scanning circuit in such a manner that the directions of their loops become opposite to each other, and a phase discrimination circuit is disposed in order to discriminate the phases of the induction signals induced to the two sense lines. Therefore, the present invention can accomplish a coordinate determining device which uses the smaller scanning circuits than in the prior art determining devices and yet exhibits the same performance.

In the coordinate determining device of the kind described above, scanning of the sense lines is necessary in order to calculate the coordinates value, and the scanning circuit is an important circuit which is indispensable for this purpose and governs the cost and reliability of the coordinate determining device. The present invention has the advantage that the scale of the scanning circuit can be reduced to one-half in comparison with the conventional scanning circuit, and moreover, since the phase discrimination circuit required afresh can be constructed by an extremely simple circuit, the present invention greatly contributes to the reduction of production cost and to the improvement of device reliability. These factors of contribution become more remarkable for a large scale coordinate determining device.

## Claims

1. An electromagnetic induction type coordinate determining device comprising:
a coordinate indicator **(2)** having an excitation coil **(3)** for generating an electromagnetic field;
an excitation circuit **(4)** for driving said excitation coil;
sense lines **(S0-S31)** receiving electromagnetically coupled signals from said excitation coil, each line in said sense lines forming a loop;
means for comparing the amplitude of a signal induced in one of said sense lines with the amplitudes of signals induced in sense lines adjacent to said one and calculating the coordinate value of the position of said coordinate indicator;
said device **being characterized**
in that said sense lines have a first **(G1)** and a second **(G2)** group of sense lines, each line in said first group being connected in series with a corresponding line in said second group;
in that the loops formed by the lines in each group are arranged in such a manner that the phase of a signal induced in the first group of lines is opposite to the phase of a signal induced in the second group of lines;
in that scanning circuit means **(5a, 5b)** are provided for sequentially selecting each line in said first group; and

in that phase discriminating means **(7)** are provided for comparing the phase of the signal of the line selected by said scanning circuit means with the phase of the signal used to drive the excitation coil so as to determine whether the coordinate indicator is nearer to the first or the second group of lines.

2. The electromagnetic induction type coordinate determining device described in claim 1, wherein:
said second group of sense lines comprises a conductor forming a folded loop.

3. The electromagnetic induction type coordinate determining device described in claim 1, wherein:
each line in said first group is disposed at a predetermined distance from its corresponding serially connected line in said second group.

## Patentansprüche

1. Nach dem Prinzip der elektromagnetischen Induktion arbeitender Koordinatenleser mit
einer Koordinatenanzeigeeinrichtung **(2)**, die zum Erzeugen eines elektromagnetischen Feldes eine Erregungsspule **(3)** aufweist,
einem Erregungsschaltkreis **(4)** zum Treiben der Erregungsspule,
Abtastleitungen **(S0-S31)**, die elektromagnetisch gekoppelte Signale von der Erregungsspule empfangen, wobei jede Leitung der Abtastleitungen eine Schleife bildet, und
eine Einrichtung zum Vergleichen der Amplitude eines in eine der Abtastleitungen induzierten Signals mit der Amplitude von Signalen, die in zu dieser Abtastleitung gegenüberliegenden Abtastleitungen induziert werden, und zum Berechnen des Koordinatenwerts der Position der Koordinatenanzeigeeinrichtung,
**dadurch gekennzeichnet**,
daß die Abtastleitungen eine erste **(G1)** und eine zweite **(G2)** Gruppe von Abtastleitungen aufweisen, wobei jede Leitung der ersten Gruppe mit einer entsprechenden Leitung in der zweiten Gruppe seriell verbunden ist,
daß die von den Leitungen jeder Gruppe gebildeten Schleifen derart angeordnet sind, daß die Phase eines in der ersten Gruppe von Abtastleitungen induzierten Signals gegenüber der Phase eines in der zweiten Gruppe von Abtastleitungen induzierten Signals entgegengesetzt ist,
daß eine Abtastschaltkreiseinrichtung **(5a, 5b)** zum sequentiellen Auswählen jeder Leitung in der ersten Gruppe vorgesehen ist, und
daß eine Phasenunterscheidungs-Einrichtung

(7) zum Vergleich der Phase des Signals der von der Abtastschaltkreis-Einrichtung gewählten Abtastleitung mit der Phase des Signals, das zum Treiben der Erregungsspule verwendet wird, vorgesehen ist, um zu bestimmen, ob sich die Koordinatenanzeigeeinrichtung näher zu der ersten oder zu der zweiten Gruppe von Abtastleitungen befindet.

2. Nach dem Prinzip der elektromagnetischen Induktion arbeitender Koordinatenleser nach Anspruch 1, **dadurch gekennzeichnet**, daß die zweite Gruppe von Abtastleitungen einen Leiter umfaßt, der eine gefaltete Schleife bildet.

3. Nach dem Prinzip der elektromagnetischen Induktion arbeitender Koordinatenleser nach Anspruch 1**, dadurch gekennzeichnet**, daß jede Leitung der ersten Gruppe von ihrer korrespondierenden, seriell verbundenen Leitung der zweiten Gruppe mit einer vorbestimmten Entfernung beabstandet ist.

**Revendications**

1. Dispositif de détermination de coordonnées du type à induction électromagnétique comprenant:

un indicateur de coordonnées (2) comportant une bobine d'excitation (3) pour engendrer un champ électromagnétique ;

un circuit d'excitation (4) pour alimenter ladite bobine d'excitation ;

des lignes de détection (S0 - S31) recevant des signaux couplés électromagnétiquement sur ladite bobine d'excitation, chaque ligne des dites lignes de détection constituant une boucle ;

des moyens pour comparer l'amplitude d'un signal induit dans l'une des dites lignes de détection avec les amplitudes des signaux induits dans les lignes de détection adjacentes à ladite ligne de détection, et pour calculer la valeur des coordonnées de la position du dit indicateur de coordonnées ;

ledit dispositif étant caractérisé en ce que

lesdites lignes de détection présentent un premier (G1) et un second (G2) groupes de lignes de détection, chaque ligne du dit premier groupe étant connectée en série à une ligne correspondante dans ledit second groupe ;

en ce que les boucles formées par les lignes de chaque groupe sont disposées d'une manière telle que la phase d'un signal induit dans le premier groupe des lignes est opposée à la phase d'un signal induit dans le second groupe de lignes ;

en ce que les moyens constituant un circuit d'analyse ou de balayage (5a, 5b) sont prévus pour sélectionner séquentiellement chaque ligne dans ledit premier groupe ; et,

en ce qu'on prévoit des moyens (7) de discrimination de phase pour comparer la phase du signal de la ligne sélectionnée par lesdits moyens constituant un circuit de balayage ou d'analyse à la phase du signal utilisé pour alimenter la bobine d'excitation, de façon à déterminer si l'indicateur de coordonnées est plus proche du premier ou du second groupe de lignes.

2. Dispositif de détermination de coordonnées du type à induction électromagnétique, décrit dans la revendication 1, dans lequel :

ledit second groupe de lignes de détection comporte un conducteur constituant une boucle repliée.

3. Dispositif de détermination de coordonnées du type à induction électromagnétique, décrit dans la revendication 1, dans lequel :

chaque ligne du dit premier groupe est disposée à une distance prédéterminée de sa ligne correspondante connectée en série dans ledit second groupe.

# F I G.1

# FIG. 2

# F I G. 3

# F I G. 4

SCAn

71a

71b

72

# F I G. 5 PRIOR ART